# EUROPEAN PATENT APPLICATION

(11) **EP 4 755 529 A1**
(43) Date of publication of application: **10.06.2026**
(21) Application number: 25846081.5
(22) Date of filing: 26.06.2025
(51) Int. Cl.: B05C 5/02, B05C 11/10, H01M 4/04, B23C 3/00

(54) **SHIM PLATE, SLOT-DIE COATER INCLUDING SAME, AND METHOD FOR MANUFACTURING SHIM PLATE**

(30) Priority: 26.09.2024 KR 20240130627
(71) Applicant: LG ENERGY SOLUTION, LTD., Seoul 07335 (KR)
(72) Inventor: JANG, Jiwoong, Daejeon 34122 (KR); AHN, Byoung Hoon, Daejeon 34122 (KR); PARK, Seung Seo, Daejeon 34122 (KR); HWANG, Yujin, Daejeon 34122 (KR); LEE, Jungwon, Daejeon 34122 (KR); KIM, Joohee, Daejeon 34122 (KR)
(74) Representative: Goddar, Heinz J.
(86) International application number: PCT/KR2025/008943
(87) International publication number: WO 2026/071399

(57) **Abstract**

A shim plate according to an exemplary embodiment of the present disclosure includes: a first side end portion in the shape of a plate provided on one side; a second side end portion in the shape of a plate provided on the other side; and at least one rib provided between the first side end portion and the second side end portion, arranged parallel to the first side end portion and the second side end portion, and configured to have at least one step in a longitudinal direction.

## Description

### [Technical Field]

The present disclosure relates to a shim plate, a slot die coater including the same, and a method for manufacturing a shim plate.

### [Background Art]

Secondary batteries refer to batteries that are chargeable and dischargeable, unlike primary batteries that are not chargeable, and are applied not only to portable devices but also to electric vehicles (EVs), hybrid electric vehicles (HEVs), and the like driven by electric drive sources.

Types of secondary batteries currently in widespread use include lithium-ion batteries, lithium polymer batteries, nickel-cadmium batteries, nickel-metal hydride batteries, nickel-zinc batteries, and the like. An operating voltage of such a unit secondary battery cell, i.e., a unit battery cell, is about 2.5 V to 4.6 V. Therefore, when a higher output voltage is required, a plurality of battery cells are connected in series to configure a battery pack. In addition, a plurality of battery cells may be connected in parallel to configure a battery pack according to the charge/discharge capacity required for a battery pack. Accordingly, the number of battery cells included in the battery pack may be set variously according to the required output voltage or charge/discharge capacity.

When configuring a battery pack by connecting a plurality of battery cells in series or in parallel, in general, a battery module including at least one battery cell, preferably a plurality of battery cells, is first configured, and then a battery pack is configured by adding other components while using the at least one battery module. Here, the battery module refers to a component in which a plurality of battery cells are connected in series or in parallel, and the battery pack refers to a component in which a plurality of battery modules are connected in series or in parallel to increase a capacity, an output, and the like.

Note that in a process of manufacturing such a secondary battery, during a slot die coating process in which an electrode active material slurry is applied to an electrode current collector, it is necessary to control the tolerance of the shim thickness because the coating width process capability of a slot die coater is determined by the tolerance control of the shim thickness.

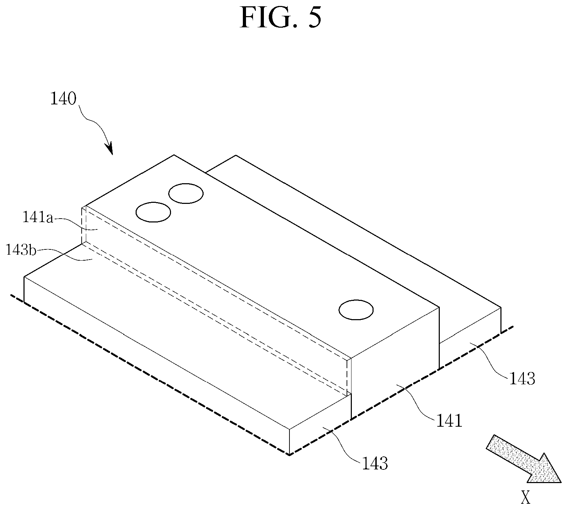

However, a rib of the related art does not have a step in a longitudinal direction. For example, referring to FIG. 5, which is a perspective view showing a rib of the related art, the rib has a constant length in the longitudinal direction (a direction parallel to the X axis). That is, the lengths of a central region and an outer region are configured to be the same. According to such a structure, when a side surface of the central portion of the rib is machined by machining center (MCT) machining, the machining tolerance of an end portion of the rib increases, which results in a decrease in coating width process capability.

### [Disclosure]

### [Technical Problem]

Therefore, an object of the present disclosure is to minimize the thickness tolerance of a shim plate.

In addition, another object of the present disclosure is to improve the coating width process capability of a slot die coater including a shim plate.

However, the technical problems to be solved by the present disclosure are not limited to those described above, and other problems not explicitly mentioned will be apparent to those skilled in the art from the following description of the disclosure.

### [Technical Solution]

To solve the above-described problems, a shim plate according to an exemplary embodiment of the present disclosure includes: a first side end portion in the shape of a plate provided on one side; a second side end portion in the shape of a plate provided on the other side; and at least one rib provided between the first side end portion and the second side end portion, arranged parallel to the first side end portion and the second side end portion, and configured to have at least one step in a longitudinal direction.

In an aspect of the present disclosure, an opening portion in which at least one region is cut from an end of the shim plate may be provided between the first side end portion and the rib, between the rib and the second side end portion, or between the ribs.

In another aspect of the present disclosure, the rib may be configured to have at least one step in a thickness direction.

In another aspect of the present disclosure, the rib may include a central portion provided at a center, and step portions provided on both sides of the central portion and configured to have a thickness smaller than that of the central portion.

Preferably, a longitudinal end of the central portion may be configured to protrude further in the longitudinal direction than a longitudinal end of each of the step portions.

More preferably, a protrusion length of the longitudinal end of the central portion relative to that of the longitudinal end of each of the step portions may be 1% to 5% of a total length of the central portion.

In an aspect of the present disclosure, the step provided at a longitudinal end of the rib may be configured to be machined by wire machining.

In another aspect of the present disclosure, a central side surface portion constituting a side surface of the central portion may be configured to be machined by MCT machining.

In an aspect of the present disclosure, a wire used for the wire machining may have a diameter of 0.2 to 0.25 mm.

For example, the wire may include at least one of brass and copper.

Further, the present disclosure provides a slot die coater including a first die block; a second die block configured to face the first die block; and at least one shim plate according to the above-described exemplary embodiment, the shim plate being interposed between the first die block and the second die block to form a slot.

In addition, to solve the above-described problems, a method for manufacturing a shim plate according to an exemplary embodiment of the present disclosure includes: preparing a shim plate; performing wire machining of machining the shim plate through wire electrical discharge machining using a wire; and performing machining center (MCT) machining of three-dimensionally machining the shim plate using an end mill after the wire machining.

In an aspect of the present disclosure, the method for manufacturing a shim plate may include performing primary high-power machining; performing secondary low-power machining at a lower power than that of the primary high-power machining; and performing tertiary low-power machining at a lower power than that of the primary high-power machining.

In another aspect of the present disclosure, a portion of the shim plate to be machined by the MCT machining may be pre-machined in the wire machining.

### [Advantageous Effects]

According to the present disclosure, the thickness tolerance of the shim plate can be minimized.

In addition, according to the present disclosure, the coating width process capability of the slot die coater including the shim plate can be improved.

However, the effects achieved by the present disclosure are not limited to those described above, and other technical effects not explicitly mentioned will be apparent to those skilled in the art from the following description of the disclosure.

### [Description of Drawings]

The accompanying drawings illustrate preferred exemplary embodiments of the present disclosure and, together with the following description of the disclosure, serve to provide a better understanding of the technical features of the present disclosure, and thus the present disclosure should not be construed as being limited to the drawings.
FIG. 1 is a diagram for illustrating a slot die coater according to an exemplary embodiment of the present disclosure.
FIG. 2 is a cross-sectional view taken along line A-A' of FIG. 1.
FIG. 3 is an exploded perspective view of FIG. 1.
FIG. 4 is a diagram for illustrating a process in which a slurry is applied onto a substrate by a shim plate according to an exemplary embodiment of the present disclosure.
FIG. 5 is a diagram for illustrating a rib structure of a shim plate of the related art.
FIG. 6 is a plan view of the rib of FIG. 5, as viewed from above.
FIG. 7 is an enlarged view of a part of FIG. 6.
FIG. 8 is a diagram for illustrating a rib structure of a shim plate according to an exemplary embodiment of the present disclosure.
FIG. 9 is a plan view of the rib of FIG. 8, as viewed from above.
FIG. 10 is an enlarged view of a part of FIG. 9.

### [Best Mode]

The advantages and features of the present disclosure, and a method for achieving the same will become apparent with reference to exemplary embodiments described in detail below together with the accompanying drawings. However, the present disclosure is not limited to the exemplary embodiments disclosed below, but can be implemented in a variety of different forms. The exemplary embodiments are provided to only complete the present disclosure and to allow one skilled in the art to which the present disclosure belongs to completely understand the category of the present disclosure. The present disclosure is only defined by the category of the claims. Thus, in some exemplary embodiments, well-known process steps, well-known device structures, and well-known technologies have not been specifically described in order to avoid obscuring the interpretation of the present disclosure. Like reference numbers designate like elements throughout the specification.

In the drawings, the thicknesses of layers and regions are exaggerated for clarity. Like reference numerals have been assigned to like elements throughout the specification. When an element such as a layer, a film, a region, a plate, or the like is referred to as being "on" another element, it may be "directly on" another element or an intervening element may also be present. Conversely, when an element is referred to as being "directly on" another element, it may mean that there is no intervening element present. In addition, when an element such as a layer, a film, a region, a plate, or the like is referred to as being "below" another element, it may be "directly below" another element or an intervening element may also be present. Conversely, when an element is referred to as being "directly below" another element, it may mean that there is no intervening element present.

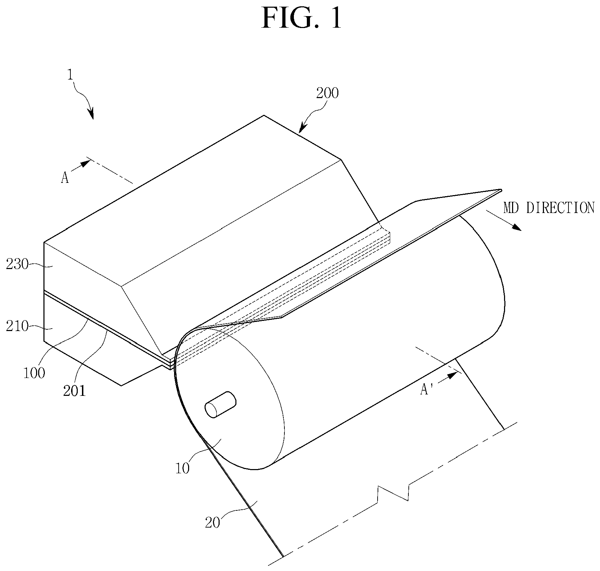

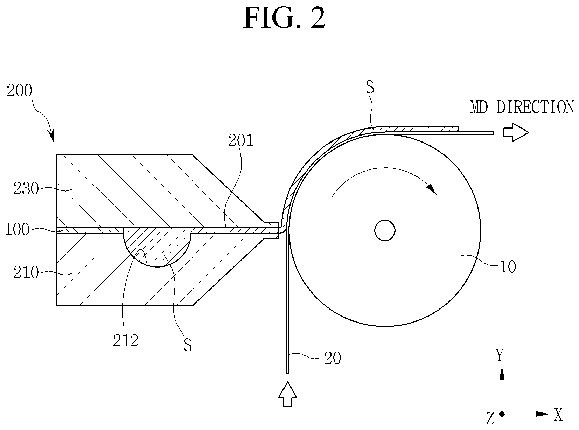

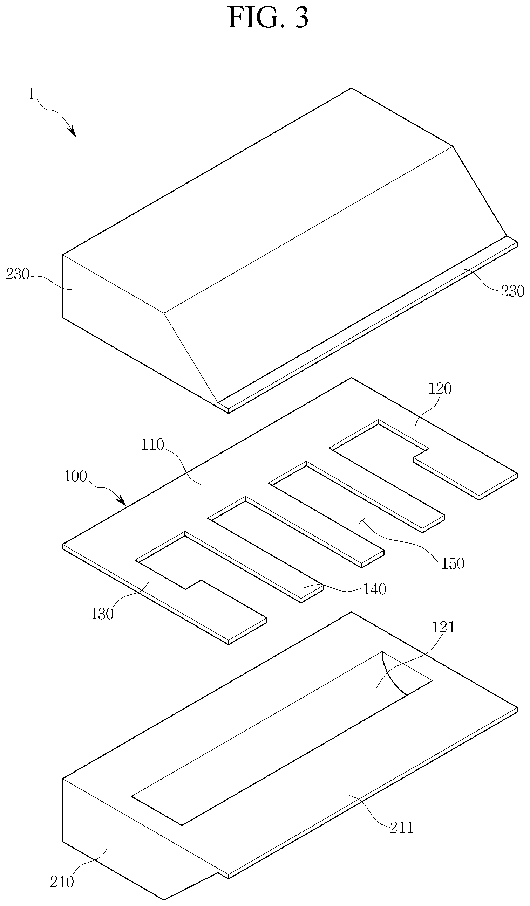

FIG. 1 is a diagram for illustrating a slot die coater 1 according to an exemplary embodiment of the present disclosure, and FIG. 2 is a cross-sectional view of FIG. 1. More specifically, FIG. 2 is a cross-sectional view taken along line A-A' of FIG. 1. FIG. 3 is an exploded perspective view of FIG. 1.

Referring to FIGS. 1 to 3, in an electrode manufacturing method using the slot die coater 1, an electrode active material slurry S discharged from the slot die coater 1 is applied onto a substrate 20 conveyed by a coating roll 10. Specifically, the coating roll 10 rotates in the MD direction of FIG. 1, and accordingly, the substrate 20 is also conveyed in the MD direction of FIG. 1, and the slurry S is coated on a surface of the substrate 20. The electrode active material slurry S discharged from the slot die coater 1 is widely applied to one surface of the substrate 20 to form an electrode active material layer.

Referring to FIGS. 1 to 3, the slot die coater 1 includes a die block 200, and a shim plate 100 interposed in the die block 200. Specifically, the die block 200 may include a first die block 210, and a second die block 230 configured to face the first die block 210. The shim plate 100 may be configured to be interposed between the first die block 210 and the second die block 230 to form a slot.

The slot die coater 1 includes the first die block 210 and the second die block 230, and forms a slot 201 between the first die block 210 and the second die block 230. The electrode active material slurry S supplied from a feed unit (not shown) is received in a manifold 212. The electrode active material slurry S is discharged through a discharge port 240 in communication with the slot 201 to form an electrode active material layer. The first die block 210 includes a first die lip 211, which is a tip portion of the first die block 210. The second die block 230 includes a second die lip 231, which is a tip portion of the second die block 230.

A coating width of the electrode active material layer coated on the substrate 20 is determined by a width of the slot 201. If a change in the coating width is required, various coating widths can be implemented by changing the shim plate 100 that determines an internal space of the manifold 212 and a width of the slot 201. That is, the coating width can be adjusted by changing the size and shape of the shim plate 100 inserted between the first die block 210 and the second die block 230.

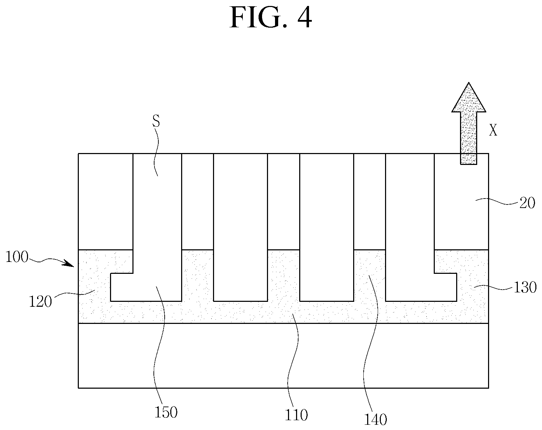

FIG. 4 is a diagram for illustrating the shim plate 100 according to an exemplary embodiment of the present disclosure.

Referring to FIG. 4, the shim plate 100 is configured to discharge an active material and is mounted inside the slot die coater 1. Specifically, the shim plate 100 may be arranged in a state of being mounted in the die block 200. Specifically, the shim plate 100 may be arranged in a state of being interposed between the first die block 210 and the second die block 230.

A height of the shim plate 100 may match a gap between the first die block 210 and the second die block 230. That is, the height of the shim plate 100 may correspond to a vertical width (Y direction, slot gap) of the slot 201 of the slot die coater 1.

Referring back to FIGS. 3 and 4, the shim plate 100 may include a base portion 110, a first side end portion 120, a second side end portion 130, and a rib 140. The shim plate 100 may further include an opening portion 150.

The shim plate 100 includes a stainless steel material. Preferably, the shim plate 100 may include an SUS304 or SUS430 material. However, the material of the shim plate 100 is not limited thereto.

The base portion 110 may be configured to have a plate shape extending in one direction. For example, the extension direction of the base portion 110 may be perpendicular to the discharge direction of the slurry S.

The first side end portion 120 and the second side end portion 130 may extend from the base portion 110. Preferably, the first side end portion 120 and the second side end portion 130 may extend in the discharge direction from the base portion 110. The first side end portion 120 and the second side end portion 130 may each be formed in a substantially plate-like shape. The first side end portion 120 may be provided on one side of the shim plate 100. For example, the first side end portion 120 may be provided on the left side with respect to the discharge direction. The second side end portion 130 may be provided on the other side of the shim plate 100. That is, the second side end portion 130 may be provided on an opposite side to the first side end portion 120. For example, the second side end portion 130 may be provided on the right side with respect to the discharge direction. That is, the first side end portion 120 and the second side end portion 130 may have a substantially plate-shaped structure provided at both ends of the base portion 110, respectively.

The shim plate 100 may include at least one rib 140. For example, the shim plate 100 may include a plurality of ribs 140. The rib 140 may be provided between the first side end portion 120 and the second side end portion 130. The rib 140 may be arranged parallel to the first side end portion 120 and the second side end portion 130. When one rib 140 is provided, an interval between the first side end portion 120 and the rib 140 may be configured to be the same as an interval between the second side end portion 130 and the rib 140. On the other hand, when a plurality of ribs 140 are provided, an interval between the first side end portion 120 and the rib 140, an interval between the second side end portion 130 and the rib 140, and an interval between the ribs 140 may be configured to be the same.

The opening portion 150 may be provided in a space between the first side end portion 120 and the rib 140, between the second side end portion 130 and the rib 140, or between the ribs 140. That is, the shim plate 100 may have the opening portion 150 in which one region is cut. The width of the opening portion 150 of the shim plate 100 is designed such that a slurry S application region having a predetermined width is formed on the substrate 20 by the opening portion 150, and non-coated regions are formed on both sides of the slurry S application region.

For example, a slurry S application region in a stripe pattern shape may be formed on the substrate 20. In such a case, the shim plate 100 as shown in FIG. 4 is used. Referring to FIG. 4, the shim plate 100 has a plurality of openings 150 in which one region is intermittently cut. When such a shim plate 100 is used, a number of slurry S application regions corresponding to the number of opening portions 150 are formed on the substrate 20 in a stripe pattern, and non-coated regions are formed on both sides of each slurry S application region. More specifically, the slurry S is discharged in the X direction, and the discharged slurry S is applied onto the substrate 20. The substrate 20 moves in the X direction, and accordingly, the slurry S can be continuously applied onto the substrate 20.

In one aspect of the present disclosure, the shim plate 100 may include at least one coating layer. The coating layer may preferably be uniformly coated over the entire region of the shim plate 100. The coating layer may have adhesiveness. With this configuration, the coating layer can be stably coated on the shim plate 100. That is, according to the above configuration, the durability of the shim plate 100 can be improved. In another aspect of the present disclosure, the coating layer may be configured to have elasticity. For example, the coating layer may include a fluorocarbon resin coating material. For example, the coating layer may be a Teflon coating layer. However, the material of the coating layer is not limited to the fluorocarbon resin. Any material that can control the thickness of the coating layer to a thin level and has adhesiveness is to be included within the scope of the coating layer of the present disclosure.

The slot die coater 1 of the present disclosure is a device having a slot and configured to coat the substrate 20 with the slurry S through the slot. The substrate 20 below refers to an electrode current collector, and the slurry S refers to the electrode active material slurry S. However, the scope of the present disclosure is not necessarily limited thereto. For example, the substrate 20 may be a porous support constituting a separator, and the slurry S may be an organic material having a composition or properties different from those of the active material. That is, if a thin film coating is required, the types of substrate 20 and slurry S are not limited.

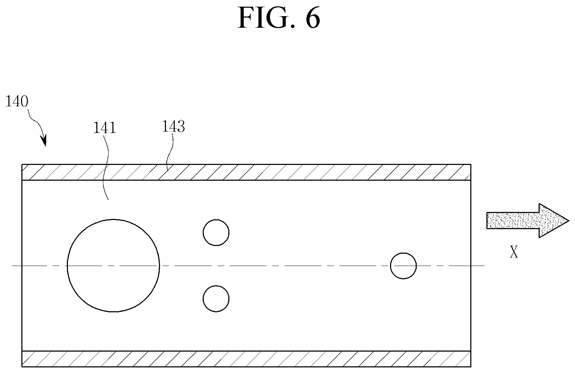

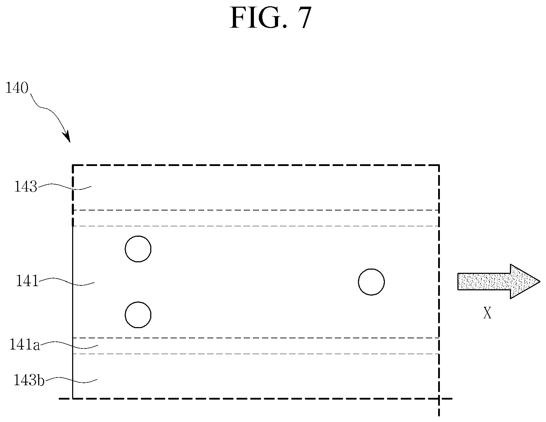

FIG. 5 is a diagram for illustrating a rib 140 structure of a shim plate 100 of the related art, and FIG. 6 is a plan view of the rib 140 of FIG. 5, as viewed from above. FIG. 7 is an enlarged view of a part of FIG. 6.

Referring to FIGS. 5 to 7, the rib 140 of the related art does not have a step in a longitudinal direction. For example, referring to FIG. 5, which is a perspective view of the rib 140 of the related art, the rib 140 has a constant length in the longitudinal direction (a direction parallel to the X axis). That is, the lengths of a central region and an outer region are configured to be the same. According to such a structure, when a side surface region of a central portion 141 of the rib 140 is machined by machining center (MCT) machining, the machining tolerance of an end portion of the rib 140 increases, which may result in a decrease in coating width process capability.

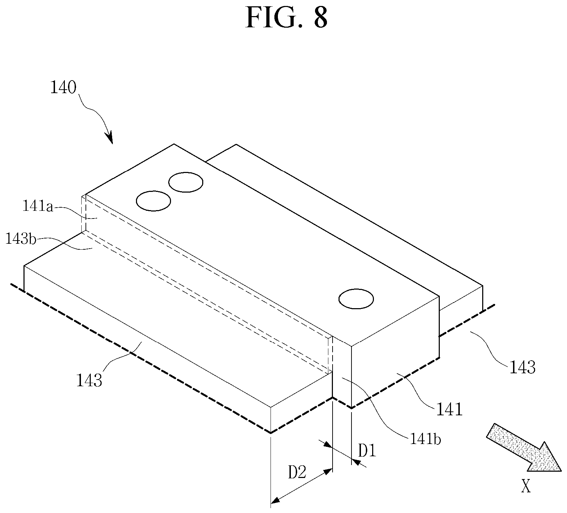

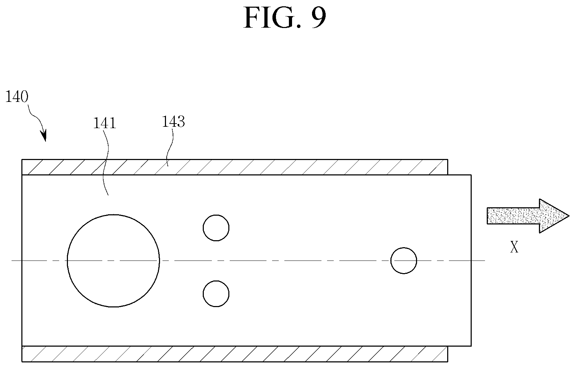

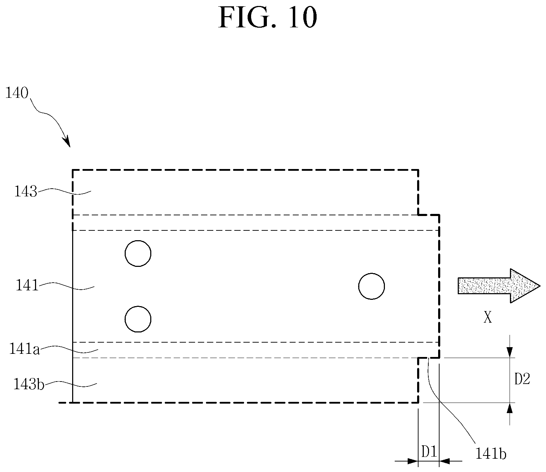

FIG. 8 is a diagram for illustrating the rib 140 structure of the shim plate 100 according to an exemplary embodiment of the present disclosure, and FIG. 9 is a plan view of the rib 140 of FIG. 8, as viewed from above. FIG. 10 is an enlarged view of a part of FIG. 9.

Referring to FIGS. 8 to 10, the rib 140 may be configured to have at least one step in the thickness direction of the rib 140. For example, the rib 140 may include a central portion 141 and a step portion 143.

The central portion 141 may be provided at the center of the rib 140. In this case, a height of the rib 140 in the thickness direction may match the gap between the first die block 210 and the second die block 230. That is, the thickness of the rib 140 may correspond to the vertical width (Y direction, slot gap) of the slot 201. Accordingly, the slurry S is prevented from passing through the central portion 141.

The step portion 143 may be provided on each of both side ends of the central portion 141. The step portion 143 may be configured to have a thickness smaller than that of the central portion 141. In this case, the thickness refers to the height of the rib 140. That is, the height of the step portion 143 may be configured to be smaller than that of the central portion 141. For example, the thickness of the step portion 143 may be configured to be about 50% to 70% of the thickness of the rib 140. Note that a length D2 in a width direction of the step portion 143 may be configured to be about 10% to 20% of a total width of the rib 140. In this case, a side surface region of the central portion 141 protruding further in the height direction than the step portion 143 is defined as a central side surface portion 141a.

According to the above configuration, the amount of slurry S discharged in the region where the step portion 143 is located is less than the amount of slurry S discharged via the central region of the opening portion 150. Accordingly, when applying an active material to the substrate 20, a sliding portion between the coated portion and the non-coated portion can be easily formed.

Referring back to FIGS. 8 to 10, the rib 140 may be configured to have at least one step in the longitudinal direction (a direction parallel to the X axis).

For example, a longitudinal end of the central portion 141 may be configured to protrude further in the longitudinal direction than a longitudinal end of the step portion 143. In this case, a side surface region of the protruding region of the central portion 141 is defined as a step side surface portion 141b.

Preferably, a protrusion length of the longitudinal end of the central portion 141 relative to that of the longitudinal end of the step portion 143 may be configured to fall within a range of 1% to 5% with respect to a total length of the central portion 141.

More preferably, the protrusion length of the longitudinal end of the central portion 141 relative to that of the longitudinal end of the step portion 143 may be configured to fall within a range of 2% to 4% with respect to the total length of the central portion 141.

In this case, the step provided at the longitudinal end of the rib 140 may be configured to be machined by wire machining. Specifically, the step side surface portion 141b provided at the longitudinal end of the rib 140 may be configured to be machined by wire machining. On the other hand, the central side surface portion 141a constituting a side surface of the central portion 141 may be configured to be machined by MCT machining.

Wire machining is also called wire cut electrical discharge machining, and refers to wire electrical discharge nachining using a wire. Here, the wire may have a diameter of 0.2 to 0.25 mm. [19] Note that the wire may include at least one of brass and copper. That is, the wire may be composed of a conductive wire including brass and/or copper. The machining quality and machining time are determined depending on a thickness of the wire, a cutting speed, and an applied current output value. The rib 140 may be subjected to three-stage wire machining, including primary high-power machining and secondary and tertiary low-power machining, to satisfy a tolerance level.

The MCT machining is a machining method capable of three-dimensional (X, Y, and Z axes) machining, and performs precision machining by applying rotational force to a fixed material using an end mill (drill) tool. Since the end mill tool is consumable, managing its usage condition is important for maintaining manufacturing tolerance control. Two types of end mills, for example, a roughing type (for performing approximately 90% of machining) and a finishing type (for performing 10% of the machining), may be used sequentially. In this case, since the deviation in machining quality varies depending on a fixed position of the material, a consistent fixing method is important.

Note that, in the general machining sequence of the shim plate 100, MCT machining is performed after wire machining. In this case, since the tolerance control level of wire machining is higher than that of MCT machining, when a portion, which is subjected to MCT machining, is pre-machined during the wire machining, the influence of tolerance that may occur during MCT machining is reduced. Therefore, according to the configuration of the present disclosure as described above, the machining tolerance level of the shim plate 100 can be satisfied. That is, according to the above configuration, the coating width process capability of the slot die coater 1 including the shim plate 100 can be improved. In addition, according to the above configuration, precision machining of the shim plate 100 becomes possible. For example, according to the above configuration, the tolerance level can be controlled within a range of about ± 0.025 mm to 0.010 mm. In addition, according to the above configuration, compared to the shim plate 100 of the related art, there is no difference in sliding or fat edge level, and the same effect can be obtained.

Referring back to FIGS. 1 to 3, the die block 200 includes the first die block 210 and the second die block 230. The shim plate 100 may be interposed between the first die block 210 and the second die block 230 to form the slot 201.

The slot 201 is formed between the first die block 210 and the second die block 230 facing each other. The shim plate 100 is interposed therein to provide a gap therebetween, thereby forming the slot 201 corresponding to a passage through which the slurry S can flow. The thickness of the shim plate 100 determines the vertical width (Y direction, slot gap) of the slot 201.

As shown in FIG. 4, the shim plate 100 may have a plurality of opening portions 150 in which one region is intermittently cut. Accordingly, a discharge port 240 through which the slurry S can be discharged to the outside is formed between the first die lip 211 and the second die lip 231, which are the respective tip portions of the first die block 210 and the second die block 230. The discharge port 240 may be referred to as a space formed by the separation between the first die lip 211 and the second die lip 231.

Referring back to FIGS. 2 and 3, either the first die block 210 or the second die block 230 may be provided with the manifold 212 having a predetermined depth and communicating with the slot 201. Although not shown in the drawings, the manifold 212 is connected via a supply pipe to a slurry S supply chamber (not shown) installed outside, and receives the slurry S. When the manifold 212 is filled with the slurry S, the slurry S is induced to flow along the slot 201 and discharged to the outside through the discharge port 240.

According to the die block 200 having such a configuration, the coating roll 10, which is rotatably provided, is arranged in front of the die block 200, and by rotating the coating roll 10, the substrate 20 to be coated is conveyed while the slurry S is discharged and continuously brought into contact with the surface of the substrate 20, so that the slurry S can be applied to the substrate 20. Alternatively, the supply and interruption of the slurry S may be alternately performed to intermittently form a pattern coating on the substrate 20.

Note that a method for manufacturing the shim plate 100 according to an exemplary embodiment of the present disclosure includes the following steps.

### (First step) First step of preparing the shim plate 100

This is a step of preparing the shim body 100 having a substantially plate-like shape and including the base portion 110, the first side end portion 120, the second side end portion 130, and at least one rib 140.

### (Second step) Second step (Wire machining step) of machining the shim plate 100 through wire electrical discharge machining using a wire

In this step, the shim plate 100 may be machined by wire electrical discharge machining using a wire. Here, the wire may have a diameter of 0.2 to 0.25 mm. [19] Note that the wire may include at least one of brass and copper. That is, the wire may be composed of a conductive wire including brass and/or copper. The machining quality and machining time may be determined depending on a thickness of the wire, a cutting speed, and an applied current output value. The rib 140 may be subjected to three-stage wire machining, including primary high-power machining and secondary and tertiary low-power machining, to satisfy a tolerance level.

For example, the wire machining step may include a high-power machining step, a secondary low-power machining step that is performed at a lower power than that of the primary high-power machining step; and a tertiary low-power machining step that is performed at a lower power than that of the primary high-power machining step. In this case, the power of the secondary low-power machining step and the power of the tertiary low-power machining step may be the same or different from each other. In this way, by dividing the machining into the plurality of wire machining steps and performing it accordingly, the tolerance level can be satisfied.

Referring to FIG. 8, in the above step, machining of the region indicated by the thick dotted line may be performed. That is, a process of cutting the longitudinal end region and the widthwise side region of the rib 140 may be performed. In particular, in the second step, the step side surface portion 141b of the rib 140 may be machined by wire machining.

In the above step, a step may be formed at the longitudinal end of the rib 140 by wire machining. More specifically, in the above step, a step having a dimension corresponding to D1 shown in FIGS. 8 to 10 may be formed in an end region of the rib 140 by wire machining. In this way, by forming the step having the dimension D1 in advance in this step, the machining tolerance of the central side surface portion 141a in the subsequent MCT machining can be minimized.

### (Third step) Third step (MCT machining step) of three-dimensionally machining the shim plate 100 using an end mill after the wire machining

This step is a step in which the shim plate 100 is three-dimensionally (X, Y, and Z axes) machined by MCT machining. In this step, precision machining is performed by applying rotational force to the fixed shim plate 100 using an end mill (drill) tool. Since the end mill tool is consumable, managing its usage condition is important for maintaining manufacturing tolerance control. Two types of end mills, for example, a roughing type (for performing approximately 90% of machining) and a finishing type (for performing 10% of the machining), may be used sequentially. In this case, since the deviation in machining quality varies depending on a fixed position of the material, a consistent fixing method is important.

Note that after the process of cutting the longitudinal end region and the widthwise side region of the rib 140, which are regions indicated by the thick dotted line, is performed by wire machining in the second step, the central side surface portion 141a may be machined in the third step. That is, a portion of the shim plate 100 to be machined by MCT machining may be pre-machined in the wire machining step. Specifically, the step in the end region of the rib 140 may be pre-machined in the wire machining step. More specifically, the step side surface portion 141b of the rib 140 may be pre-machined in the wire machining step. In this way, by forming the step having the dimension D1 in advance in this step, the machining tolerance of the central side surface portion 141a in the MCT machining that is performed in the third step can be minimized.

According to the method for manufacturing the shim plate 100 according to an exemplary embodiment of the present disclosure including the steps described above, the level of thickness tolerance control can be improved. Accordingly, according to the above configuration, the coating width process capability of the slot die coater 1 can be improved.

Note that although the terms indicating directions such as upper and lower are used herein, these terms are used only for convenience of description, and it is apparent to one skilled in the art that these terms may change depending on the position of the target object or the position of the observer.

Although the present disclosure has been described with reference to the limited exemplary embodiments and drawings, the present disclosure is not limited thereto, and a variety of modifications and variations can be made within the technical spirit of the present disclosure and the equivalent range of the claims described below by one skilled in the art to which the present disclosure belongs.

## Claims

1. A shim plate comprising:
a first side end portion in the shape of a plate provided on one side;
a second side end portion in the shape of a plate provided on the other side; and
at least one rib provided between the first side end portion and the second side end portion, arranged parallel to the first side end portion and the second side end portion, and configured to have at least one step in a longitudinal direction.

2. The shim plate of claim 1, wherein an opening portion in which at least one region is cut from an end of the shim plate is provided between the first side end portion and the rib, between the rib and the second side end portion, or between the ribs.

3. The shim plate of claim 1, wherein the rib is configured to have at least one step in a thickness direction.

4. The shim plate of claim 1, wherein the rib comprises
a central portion provided at a center, and
step portions provided on both side ends of the central portion and configured to have a thickness smaller than that of the central portion.

5. The shim plate of claim 4, wherein a longitudinal end of the central portion is configured to protrude further in the longitudinal direction than a longitudinal end of each of the step portions.

6. The shim plate of claim 5, wherein a protrusion length of the longitudinal end of the central portion relative to that of the longitudinal end of each of the step portions is 1% to 5% of a total length of the central portion.

7. The shim plate of claim 5, wherein the step provided at a longitudinal end of the rib is configured to be machined by wire machining.

8. The shim plate of claim 4, wherein a central side surface portion constituting a side surface of the central portion is configured to be machined by MCT machining.

9. The shim plate of claim 7, wherein a wire used for the wire machining has a diameter of 0.2 to 0.25 mm.

10. The shim plate of claim 7, wherein the wire includes at least one of brass and copper.

11. A slot die coater comprising:
a first die block;
a second die block configured to face the first die block; and
the shim plate of any one of claims 1 to 10, the shim plate being interposed between the first die block and the second die block to form a slot.

12. A method for manufacturing a shim plate, the method comprising:
preparing a shim plate;
performing wire machining of machining the shim plate through wire electrical discharge machining using a wire; and
performing machining center (MCT) machining of three-dimensionally machining the shim plate using an end mill after the wire machining.

13. The method of claim 12, comprising
performing primary high-power machining;
performing secondary low-power machining at a lower power than that of the primary high-power machining; and
performing tertiary low-power machining at a lower power than that of the primary high-power machining.

14. The method of claim 12, wherein a portion of the shim plate to be machined by the MCT machining is pre-machined in the wire machining.
